(19) Europäisches Patentamt

European Patent Office

Office européen des brevets

(11) **EP 1 710 608 A1**

(12) **EUROPÄISCHE PATENTANMELDUNG**

(43) Veröffentlichungstag:
**11.10.2006 Patentblatt 2006/41**

(51) Int Cl.:
***G02B 7/28*** *(2006.01)*

(21) Anmeldenummer: **06003083.0**

(22) Anmeldetag: **15.02.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **07.04.2005 DE 102005016029**

(71) Anmelder: **SICK AG**
**79183 Waldkirch/Breisgau (DE)**

(72) Erfinder:
• **Runge, Wolfram, Dr.**
**79104 Freiburg (DE)**
• **Pastor, Sebastian**
**79104 Freiburg (DE)**
• **Egger, Christoph**
**79211 Denzlingen (DE)**

(74) Vertreter: **Manitz, Finsterwald & Partner GbR**
**Postfach 31 02 20**
**80102 München (DE)**

(54) **Vorrichtung und Verfahren zur Bestimmung der Fokuslage**

(57)    Die Erfindung betrifft eine Vorrichtung zur Bestimmung der Fokuslage eines optischen Abbildungssystems mit einem ersten und einem zweiten teilreflektierenden Element, die im Strahlengang derart unter einem Winkel zur optischen Achse angeordnet sind, dass ein erster Teil des Lichtes an dem ersten Element in ein erstes Lichtfeld reflektiert wird, ein zweiter Teil des Lichtes an dem zweiten Element in ein zweites Lichtfeld reflektiert wird und ein dritter Teil des Lichtes durch beide Elemente hindurchtritt, um ein drittes Lichtfeld zu bilden, und einer optischen Detektionseinrichtung zur Registrierung wenigstens eines Teils eines Interferenzmusters im Überlappungsbereich des ersten und zweiten Lichtfeldes. Die Erfindung betrifft weiterhin ein optisches Abbildungssystem mit einer erfindungsgemäßen Vorrichtung zur Bestimmung der Fokuslage und einem Laserscanner mit einem erfindungsgemäßen optischen Abbildungssystem. Schließlich betrifft die Erfindung ein Verfahren zur Feststellung der Fokuslage eines optischen Abbildungssystems mit veränderlicher Fokuslage.

Figur 1

EP 1 710 608 A1

**Beschreibung**

Die Erfindung betrifft eine Vorrichtung und ein Verfahren zur Bestimmung der Fokuslage eines optischen Abbildungssystems mit veränderlicher Fokuslage.

Laserabbildungssysteme werden zum Beispiel bei Barcodescannern eingesetzt. Zum Beispiel das Licht einer Laserdiode wird mit Hilfe einer optischen Einrichtung kollimiert und auf ein Lesefeld fokussiert um einen Barcode zu registrieren, der sich dort befindet. Die Lage der Strahltaille, die im folgenden mit Fokuslage bezeichnet wird, bestimmt u.a. an welcher Stelle ein Code gelesen werden kann. Die möglichen Abstände eines zu lesenden Barcodes vom optischen System, in denen eine ausreichend genaue Lesung möglich ist, ist durch die Schärfentiefe des optischen Abbildungssystems begrenzt. Um den Arbeitsbereich zu vergrößern, werden Barcodeleser mit veränderlicher Fokuslage verwendet. Dazu wird zum Beispiel der Abstand der Laserdiode zu der kollimierenden Einrichtung verändert, um so die Fokuslage bzw. die Lage der Strahltaille zu verändern.

Damit die Fokuslage sich immer möglichst genau in dem Abstand befindet, in dem sich auch der zu lesende Code befindet, bzw. um das System entsprechend einstellen zu können, muss die Fokuslage des Barcodescanners bekannt sein.

Um die Fokuslage präzise zu kennen wird bei bekannten Geräten der Abstand von Laserdiode zu Kollimator mikrometergenau eingestellt. Die Einstellung erfolgt zum Beispiel in einem gesteuerten Betrieb entsprechend einer Charakteristik, die optisch-konstruktiv definiert wurde und/oder eingelernt wurde.

Dazu muss die gesamte optisch-mechanische Anordnung äußerste Präzision aufweisen und darf sich auch unter realistischen Betriebsbedingungen, also zum Beispiel bei veränderlicher Temperatur, Vibration oder durch Alterung, nicht ändern.

Aufgabe der vorliegenden Erfindung ist es, eine Vorrichtung zur Bestimmung der Fokuslage eines optischen Abbildungssystems, ein optisches Abbildungssystem und ein Verfahren zur Feststellung der Fokuslage eines optischen Abbildungssystems anzugeben, die es erlauben, schnell und zuverlässig die momentan eingestellte Fokuslage zu bestimmen.

Diese Aufgabe wird mit einer Vorrichtung zur Bestimmung der Fokuslage eines optischen Abbildungssystems mit den Merkmalen des Anspruchs 1, ein optisches Abbildungssystem mit den Merkmalen des Anspruchs 8, einem Laserscanner mit den Merkmalen des Anspruchs 10 bzw. ein Verfahren zur Feststellung der Fokuslage eines optischen Abbildungssystems mit den Merkmalen des Anspruchs 11 gelöst. Unteransprüche sind auf bevorzugte Ausgestaltungen gerichtet.

Eine erfindungsgemäße Vorrichtung zur Bestimmung der Fokuslage weist ein erstes und ein zweites teilreflektierendes Element auf, die hintereinander im Strahlengang im Anschluss an das kollimierende Element angeordnet sind. Die Anordnung der teilreflektierenden Elemente ist derart unter einem Winkel gewählt, dass ein erster Teil des von der Laserlichtquelle des optischen Abbildungssystems ausgesendeten und von dem kollimierenden Element kollimierten Licht an dem ersten teilreflektierenden Element in ein erstes Lichtfeld reflektiert wird. Ein zweiter Teil des Lichtes, der durch das erste teilreflektierende Element hindurchgetreten ist, wird an dem zweiten teilreflektierendem Element in ein zweites Lichtfeld reflektiert. Ein dritter Teil des Lichtes, der durch beide teilreflektierenden Elemente hindurchgetreten ist, bildet ein drittes Lichtfeld. Eine optische Detektionseinrichtung ist vorgesehen, die derart angeordnet ist, dass sie zumindest einen Teil eines Interferenzmusters registrieren kann, das sich im Überlappungsbereich des ersten und des zweiten Lichtfeldes ergibt.

Als kollimierendes Element kann z.B. eine einzelne Kollimatorlinse oder ein kollimierendes Linsensystem eingesetzt werden.

Bei einem erfindungsgemäßen Verfahren zur Feststellung der Fokuslage eines optischen Abbildungssystems mit veränderlicher Fokuslänge werden ein erstes und ein zweites teilreflektierendes Element hintereinander auf der dem kollimierenden Element abgewandten Seite des Strahlenganges des von der Laserlichtquelle ausgesendeten Laserlichtes angeordnet. Die teilreflektierenden Elemente werden unter einem Winkel zur optischen Achse derart angeordnet, dass ein erster Teil des von der Laserlichtquelle und dem kollimierenden Element kommenden Lichtes an dem ersten teilreflektierenden Element in ein erstes Lichtfeld reflektiert wird und ein zweiter Teil des Lichtes an dem zweiten teilreflektierenden Element in ein zweites Lichtfeld reflektiert wird. Ein dritter Teil des Lichtes tritt durch beide Elemente hindurch und bildet so ein drittes Lichtfeld. Das Interferenzmuster im Überlappungsbereich des ersten und des zweiten Lichtfeldes wird zur Bestimmung der Fokuslage des dritten Lichtfeldes ausgewertet.

Aus dem Strahlengang des optischen Abbildungssystems werden also zwei Lichtfelder ausgekoppelt, die zur Bestimmung der Fokuslage eines dritten Lichtfeldes eingesetzt werden. Die mit Hilfe der erfindungsgemäßen Vorrichtung bzw. dem erfindungsgemäßen Verfahren festgestellte Fokuslage ermöglicht einen präzisen, ggf. geregelten Betrieb des optischen Abbildungssystems mit veränderlicher Fokuslage. Die Messung ist einfach und schnell durchführbar und die Vorrichtung zeichnet sich durch kompakte Bauform aus.

Besonders vorteilhaft lässt sich die erfindungsgemäße Vorrichtung bzw. das erfindungsgemäße Verfahren bei Laserscannern, insbesondere Barcodescannern einsetzen. Solche Systeme weisen oftmals veränderliche Fokuslagen auf um einen vergrößerten Arbeitsbereich zu haben, der nicht durch die Schärfentiefe des optischen Abbildungssystems begrenzt ist.

Das erste und das zweite teilreflektierende Element können durch entsprechend ausgestaltete teildurchlässige Spiegel gebildet sein. Besonders einfach und kostengünstig ist die Verwendung einer vorzugsweise planparallelen Glasplatte. Der Hauptteil des einfallenden Lichtes tritt durch die Glasplatte hindurch und steht für die Beleuchtung des zu registrierenden Objektes, zum Beispiel des Barcodes zur Verfügung. Nur ein geringer Teil des Lichtes wird an der ersten Oberfläche und ein weiterer geringer Teil an der zweiten Oberfläche der Glasplatte reflektiert. Eine normale Glasplatte ohne jede Oberflächenbeschichtung weist zum Beispiel eine entsprechende fresnelsche Reflexion von wenigen Prozent auf. Derartige Größenordnungen sind ausreichend um das erfindungsgemäße Messprinzip zu verwirklichen.

Besonders einfach ist eine Anordnung, in der das erste und das zweite teilreflektierende Element parallel zueinander angeordnet sind. Das erfindungsgemäße Messprinzip lässt sich jedoch auch mit Vorrichtungen bzw. Verfahren durchführen, bei denen die beiden teilreflektierenden Elemente zwar in fester Beziehung zueinander, aber nicht notwendigerweise parallel zueinander angeordnet sind.

Einfache und symmetrische Verhältnisse ergeben sich, wenn die teilreflektierenden Elemente unter einem Winkel von 45° zur optischen Achse des optischen Abbildungssystems angeordnet sind.

Die optische Detektionseinrichtung im Überlappungsbereich des ersten und zweiten Lichtfeldes kann eine Mattscheibe sein, auf der das Interferenzmuster aufgezeichnet wird. Durch Vergleich mit den Mustern bei bekannter Fokuslage kann so die Fokuslage wie gewünscht eingestellt oder festgestellt werden.

Eine einfache Ausgestaltung sieht vor, dass in den Überlappungsbereich ein fotosensitiver und ortsabhängiger Sensor angeordnet ist, beispielsweise ein CMOS-Sensor oder ein CCD-Sensor. Kostengünstig und für die Anwendung ausreichend ist zum Beispiel ein eindimensionaler Sensor, der senkrecht zu den zu erwartenden Interferenzstreifen angeordnet ist um die Abstände der Interferenzstreifen zu messen. In einer entsprechenden Auswerteeinheit, zum Beispiel einem Mikroprozessor, können die so gemessenen Abstände mit Abständen verglichen werden, die zum Beispiel im Rahmen einer Vorabeichmessung festgestellt wurden, um so auf die Fokuslage des optischen Abbildungssystems zurückschließen zu können.

Die Erfindung betrifft weiterhin ein optisches Abbildungssystem mit veränderlicher Fokuslage mit wenigstens einer Laserlichtquelle und wenigstens einem kollimierenden optischen Element, insbesondere einer Kollimatorlinse. Weiterhin weist das erfindungsgemäße optische Abbildungssystem eine erfindungsgemäße Vorrichtung zur Bestimmung der Fokuslage auf. Als Laserlichtquelle kann z.B. eine Laserdiode verwendet werden.

Die Anwendung ist dabei nicht auf die Verwendung von sichtbarem Licht begrenzt.

Zur Veränderung der Fokuslage können einzelne Elemente des optischen Abbildungssystems verschoben werden. Zum Beispiel kann die Lage des kollimierenden optischen Elements verändert werden um die Lage seiner Bildebene zu verschieben. Besonders einfach ist jedoch eine Verschiebung der Laserlichtquelle relativ zur Lage des kollimierenden optischen Elementes, wodurch die Bildebene auf der optischen Achse verschoben wird und somit die Fokuslage verändert wird.

Die erfindungsgemäßen Vorrichtungen bzw. das erfindungsgemäße Verfahren erlauben einen geregelten Betrieb bei der Einstellung der Fokuslage. Dabei kann das Signal der optischen Detektionseinrichtung verwendet werden, um die Fokuslage festzustellen und die relative Lage der einzelnen optischen Elemente des optischen Abbildungssystemes, insbeondere die Lage der Laserlichtquelle, so einzustellen, dass eine gewünschte Fokuslage erhalten wird. Dabei kann z.B. das Ausgangssignal eines Sensors im Überlappungsbereich der reflektierten Lichtfelder direkt als Regelgröße eingesetzt werden.

Die Erfindung wird anhand der beiliegenden Figur erläutert, die eine erfindungsgemäße Ausgestaltung darstellt. Dabei zeigt

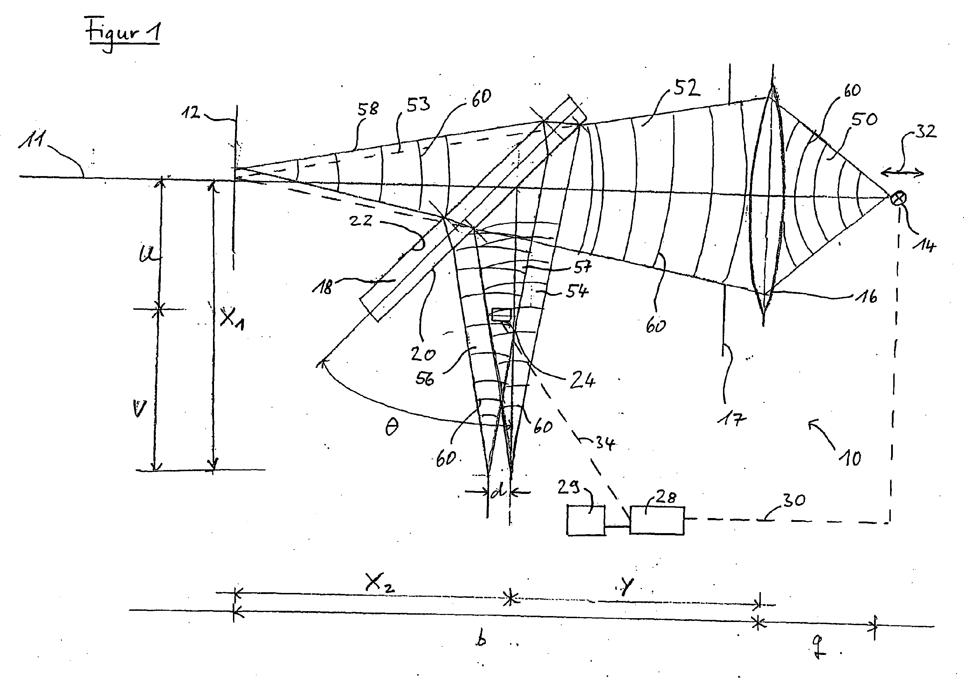

Fig. 1    in schematischer Darstellung das Messprinzip einer erfindungsgemäßen Vorrichtung.

Bei dem in Fig. 1 gezeigten Beispiel eines optischen Abbildungssystems 10 ist eine Laserdiode 14 auf der optischen Achse 11 angeordnet. Eine Kollimatorlinse 16 und eine Blende 17 sind im Strahlengang angeordnet. Die nur schematisch dargestellte Kollimatorlinse 16 kann durch ein optisches System ersetzt sein, das zu einer Kollimierung des Strahlengangs führt, ohne dass es sich dabei um eine einzelne Linse handeln müsste.

Durch die Kollimatorlinse 16 wird das von der Laserdiode 14 divergent ausgesendete Licht 50 in konvergentes durch die Blende begrenztes Licht 52 kollimiert. Zur Verdeutlichung sind in den Lichtkegeln 50, 52 schematisch Wellenfronten 60 angedeutet. Wären keine weiteren Elemente im Strahlengang, würde das Licht entsprechend des strichlinierten Kegels 53 auf der Abbildungsebene 12 in der optischen Achse 11 fokussiert.

In der Abbildungsebene 12 befindet sich in nicht dargestellter Weise zum Beispiel ein zu registrierender Barcode. Die Laserlichtdiode 14 ist in Pfeilrichtung 32 auf der optischen Achse verschiebbar um die Lage der Abbildungsebene 12 zu verändern, um die Fokuslage an die tatsächliche Lage des Barcodes anzupassen. Zwischen dem Abstand g der Laserdiode 14 von der Hauptebene der Linse 16 und dem Abstand b der Abbildungsebene 12 von der Hauptebene der Linse 16 besteht dabei ein eindeutiger Zusammenhang:

$$1/b = 1/f - 1/g \, ,$$

wobei f die Brennweite der Kollimatorlinse 16 ist. Verschieben der Laserdiode 14 in Pfeilrichtung 32 ändert daher in eindeutiger Weise die Fokuslage, die dem Abstand b entspricht. Fig. 1 ist dabei nicht als maßstabsgetreu zu verstehen, sondern nur als schematische Darstellung. So kann der Abstand der Abbildungsebene 12 von der Kollimatorlinse 16 zum Beispiel etwa 2 m betragen.

In dem kollimierten Lichtkegel 52 befindet sich unter einem Winkel θ = 45° eine Glasplatte 18 mit einer ersten Oberfläche 20 und einer zweiten Oberfläche 22. Der Abstand der Glasplatte 18 von der Hauptebene der Kollimatorlinse 16 auf der optischen Achse 11 ist mit Y bezeichnet, während der Abstand der Abbildungsebene 12 von der Glasplatte 18 auf der optischen Achse 11 $X_2$ genannt ist.

An der ersten Oberfläche 20 wird ein Teil des Lichtes 52 in einen ersten Lichtkegel 54 reflektiert. Nach Brechung an der ersten Oberfläche 20 wird ein zweiter Teil des Lichtes an der zweiten Oberfläche 22 der Glasplatte 18 reflektiert und tritt wiederum nach Brechung an der Oberfläche 20 in einen zweiten Lichtkegel 56 aus. Bei einer normalen Glasplatte ohne jede Oberflächenbeschichtung werden z.B. ca. 4% an den jeweiligen Oberflächen reflektiert. Der Überlappungsbereich der Lichtkegel 54, 56 trägt das Bezugszeichen 57.

Der überwiegende Teil des Lichtes tritt durch die Glasplatte hindurch und bildet das dritte Lichtfeld 58, das auf die Abbildungsebene 12 fokussiert ist.

Auch im ersten, zweiten und dritten Lichtfeld 54, 56, 58 sind schematisch Wellenfronten 60 angedeutet.

Im Abstand U von der optischen Achse 11 ist im Überlappungsbereich 57 des ersten und zweiten Lichtfeldes 54, 56 bei der gezeigten Ausführungsform ein eindimensionaler CMOS-Sensor 24 angeordnet, der parallel zur optischen Achse 11 ausgerichtet ist und zum Beispiel 500 Pixel der Größe 500 $\mu$m x 25 $\mu$m in einer Reihe umfassen kann. Der CMOS-Sensor 24 ist über eine Signalleitung 24 mit einer elektronischen Steuerung 28, zum Beispiel mit einem Mikroprozessor verbunden, der seinerseits mit einer Speichereinheit 29 verbunden ist. Über eine Steuerleitung 30 kommuniziert der Mikroprozessor mit der nicht dargestellten Linearsteuerung der Laserdiode 14, die zur Bewegung der Laserdiode 14 in Pfeilrichtung 32 eingesetzt wird.

Die erfindungsgemäße Anordnung wird wie folgt eingesetzt:

In der Abbildungsebene 12 befindet sich in nicht dargestellter Weise zum Beispiel ein zu registrierender Barcode bzw. es wird ein Barcode in der Abbildungsebene 12 bewegt. Licht 50 der Laserdiode 14 wird von der Kollimatorlinse 16 kollimiert und durch die Blende 17 begrenzt. Der so entstehende Lichtkegel 52 trifft auf die erste Oberfläche der Glasplatte 18 und wird zu einem geringen Prozentsatz in das erste Lichtfeld 54 reflektiert. Der in die Glasplatte 17 eintretende Teil des Lichtfeldes 52 wird an der Oberfläche 20 gebrochen und an der Rückseite 22 der Glasplatte 18 zu einem geringen Prozentsatz reflektiert. Das Licht dieses Teils tritt aus der Glasplatte wiederum an der Oberfläche 20 aus und bildet das Lichtfeld 56. Das durch die Glasplatte leicht versetzte dritte Lichtfeld 58 wird auf die Abbildungsebene 12 fokussiert und dient dort zur Registrierung des Barcodes. Die Auswertung des Barcodes erfolgt in an sich bekannter Weise durch hier nicht gesondert dargestellte Detektions- und Auswerteeinrichtungen.

Lichtfelder 54 und 56 interferieren in ihrem Überlappungsbereich 57 und bilden ein Interferenzstreifenmuster, dessen Streifen senkrecht zur Figurenebene ausgerichtet sind. Die Interferenzstreifen werden mit Hilfe des CMOS-Sensors 24 aufgenommen, dessen Signal über die Steuerleitung 34 an den Mikroprozessor 28 geleitet wird. Hier wird der Abstand der Interferenzstreifen ausgewertet und/oder mit bekannten Mustern verglichen, die in der Speichereinheit 29 abgelegt sind.

Aus dem Abstand der Interferenzstreifen lässt sich in eindeutiger Weise auf die Lage der Abbildungsebene zurückschließen. Durch Vergleich mit den in der Speichereinheit 29 abgelegten Mustern oder den charakteristischen Abständen ist also eine Bestimmung der Fokuslage möglich. Über die Steuerleitung 30 kann der Mikroprozessor 28 durch Einstellung der Lage der Laserdiode 14 eine gewünschte Fokuslage festlegen.

Der Zusammenhang zwischen dem an dem Sensor 24 gemessenen Interferenzmuster und der Lage der Abbildungsebene 12 kann bei der gezeigten Ausgestaltung wie folgt verstanden werden, wobei die folgende Erläuterung nur als qualitative Erklärung des Messprinzips verstanden werden soll.

X1 bezeichnet den Abstand der Foki des ersten und des zweiten Lichtfeldes 54, 56 von der optischen Achse 11, die bei der in der gezeigten Ausführungsform verwirklichten symmetrischen Anordnung und zumindest bei im Vergleich zur Fokuslänge b kleiner Dicke der Glasplatte 18 etwa gleich sind und dem Abstand $X_2$ der Abbildungsebene 12 von der Glasplatte 18 an der optischen Achse 11 entsprechen. d bezeichnet den Abstand der Foki des ersten und des zweiten Lichtfeldes 54, 56 voneinander. V bezeichnet die Differenz von X1 und U und insofern den Abstand des eindimensionalen CMOS-Sensors 24 von den Foki des ersten und des zweiten Lichtfeldes 54, 56. Es gilt:

$$b = X_2 + Y = X_1 + Y = V + U + Y.$$

Da U und Y konstant sind, besteht ein direkter Zusammenhang zwischen der Fokuslänge b bzw. der Fokuslage und der Länge V.

Die Lage der Interferenzstreifen an dem Sensor 24 kann mit Hilfe einer Hilfskonstruktion abgeschätzt werden, die einem Doppelspaltinterferenzexperiment entspricht, bei dem angenommen wird, dass Laserlicht durch zwei Spalte im Abstand d an den Punkten der Foki der Lichtfelder 54 und 56 entgegen dem Strahlengang der betrachteten Anordnung gesendet wird. In einer Entfernung V von dem angenommenen Doppelspalt entstehen Interferenzstreifen mit einem Abstand Δ voneinander. Aus den Formeln für die Beugung am Doppelspalt lässt sich daraus die Länge V abschätzen (λ: Wellenlänge des Laserlichtes):

$$V \approx (d/\lambda) \cdot \Delta.$$

Für die Fokuslänge b gilt daher:

$$b = V + U + Y \approx (d/\lambda) \cdot \Delta + U + Y.$$

Zwischen der Fokuslage b und dem Abstand Δ der Interferenzstreifen am Ort des CMOS-Sensors 24 besteht also ein reproduzierbarer Zusammenhang.

Im Rahmen einer vorgeschalteten Eichmessung können für unterschiedliche Fokuslagen die resultierenden Abstände der Interferenzstreifen am Ort des Detektors 24 vermessen und abgespeichert werden und zum Vergleich mit einem jeweils aktuell gemessenen Messwert für den Abstand der Interferenzstreifen herangezogen werden um daraus die aktuelle Fokuslage zu bestimmen.

**Bezugszeichenliste**

10    optisches Abbildungssystem
11    optische Achse
12    Abbildungsebene
14    Laserdiode
16    Kollimatorlinse
17    Blende
18    Glasplatte
20    erste Oberfläche
22    zweite Oberfläche
24    CMOS-Sensor
28    Mikroprozessor
29    Speichereinheit
30    Steuerleitung
32    Bewegung der Laserdiode
34    Signalleitung
50    divergentes Licht
52    konvergentes Lichtbündel
53    konvergentes Lichtbündel ohne Glasplatte
54    erstes Lichtfeld
56    zweites Lichtfeld

| 57 | Überlappungsbereich von erstem und zweitem Lichtfeld |
|----|---|
| 58 | drittes Lichtfeld |
| 60 | Wellenfronten |
| g | Abstand Laserdiode - Kollimatorlinse |
| b | Abstand Kollimatorlinse - Abbildungsebene |
| U | Abstand Glasplatte - CMOS-Sensor |
| $X_2$ | Abstand Glasplatte - Abbildungsebene |
| Y | Abstand Kollimatorlinse - Glasplatte |
| θ | Winkel der Glasplatte zur optischen Achse |

## Patentansprüche

**1.** Vorrichtung zur Bestimmung der Fokuslage eines optischen Abbildungssystems (10) mit veränderlicher Fokuslage, das wenigstens eine Laserlichtquelle (14) und wenigstens ein kollimierendes optisches Element (16) aufweist, mit

- einem ersten und einem zweiten teilreflektierenden Element (20, 22), die hintereinander auf der dem wenigstens einen kollimierenden Element (16) abgewandten Seite des Strahlenganges des von der Laserlichtquelle (14) ausgesendeten Laserlichtes (52) angeordnet sind, wobei die teilreflektierenden Elemente (20, 22) in einem Winkel zur optischen Achse (11) des Strahlenganges derart angeordnet sind, dass ein erster Teil des von der Laserlichtquelle (14) ausgesendeten und von dem wenigstens einen kollimierenden Element (16) kollimierten Licht an dem ersten teilreflektierenden Element (20) in ein erstes Lichtfeld (54) reflektiert wird, ein zweiter Teil des Lichtes an dem zweiten teilreflektierenden Element in ein zweites Lichtfeld (56) reflektiert wird und ein dritter Teil des Lichtes durch beide teilreflektierenden Elemente (20, 22) hindurch tritt um ein drittes Lichtfeld (58) zu bilden, und
- einer optischen Detektionseinrichtung (24) zur Registrierung wenigstens eines Teiles eines Interferenzmusters in dem Überlappungsbereich (57) des ersten und des zweiten Lichtfeldes (54, 56).

**2.** Vorrichtung nach Anspruch 1, bei der das erste teilreflektierende Element durch die Vorderseite (20) und das zweite teilreflektierende Element durch die Rückseite (22) einer vorzugsweise planparallelen Platte (18) gebildet sind, wobei die Platte insbesondere eine Glasplatte (18) umfasst.

**3.** Vorrichtung nach einem der Ansprüche 1 oder 2, wobei das erste und/oder das zweite teilreflektierende Element (20, 22) unter einem Winkel θ von 45° zur optischen Achse (11) angeordnet ist.

**4.** Vorrichtung nach einem der Ansprüche 1 bis 3, bei der die optische Detektionseinrichtung einen vorzugsweise eindimensionalen CCD- oder CMOS-Sensor (24) umfasst.

**5.** Vorrichtung nach einem der Ansprüche 1 bis 4, mit einer Speichereinrichtung (29) zur Speicherung des Zusammenhanges zwischen der Fokuslage und zu erwartenden Interferenzmustern, insbesondere mit einer Auswerteeinheit (28) zur Bestimmung der Fokuslage aus einem Ausgangssignal der optischen Detektionseinheit (24) und dem gespeicherten Zusammenhang.

**6.** Optisches Abbildungssystem mit veränderlicher Fokuslage mit

- wenigstens einer Laserlichtquelle (14),
- wenigstens einem kollimierenden optischen Element, insbesondere einer Kollimatorlinse (16), im Strahlengang (52) der Laserlichtquelle (14),
- einer Vorrichtung zur Bestimmung der Fokuslage nach einem der Ansprüche 1 bis 5, wobei insbesondere die Fokuslage durch Veränderung des Abstandes (7) der Laserlichtquelle (14) von dem wenigstens einen kollimierenden Element (16) einstellbar ist.

**7.** Laserscanner, insbesondere Barcodescanner, mit einem optischen Abbildungssystem nach Anspruch 8.

**8.** Verfahren zur Feststellung der Fokuslage eines optischen Abbildungssystems mit veränderlicher Fokuslage, insbesondere eines Laserscanners, das wenigstens eine Laserlichtquelle (14) und wenigstens ein kollimierendes optisches Element (16) aufweist, bei dem

- ein erstes und ein zweites teilreflektierendes Element (20, 22) hintereinander auf der dem wenigstens einen kollimierenden Element (16) abgewandten Seite des Strahlenganges des von der Laserlichtquelle (14) ausgesendeten Laserlichtes (52) unter einem Winkel zur optischen Achse (11) des Strahlenganges angeordnet werden, wobei die teilreflektierenden Elemente (20, 22) derart angeordnet werden, dass ein erster Teil des von der Laserlichtquelle (14) und dem wenigstens einen kollimierenden Element (16) kommenden Lichtes an dem ersten teilreflektierenden Element (20) in ein erstes Lichtfeld (54) reflektiert wird, ein zweiter Teil des Lichtes an dem zweiten teilreflektierenden Element (22) in ein zweites Lichtfeld (56) reflektiert wird und ein dritter Teil des Lichtes durch beide teilreflektierenden Elemente (20, 22) hindurch tritt um ein drittes Lichtfeld (58) zu bilden, und

- das Interferenzmuster im Überlappungsbereich (57) des ersten und des zweiten Lichtfeldes (54, 56) zur Bestimmung der Fokuslage des dritten Lichtfeldes (58) eingesetzt wird.

9. Verfahren nach Anspruch 8, bei dem das erste und/oder das zweite teilreflektierende Element (20, 22) unter einem Winkel von 45° zur optischen Achse (11) des optischen Abbildungssystems in den Strahlengang eingebracht werden.

10. Verfahren nach einem der Ansprüche 8 oder 9, bei dem die Vorderseite (20) einer teildurchlässigen vorzugsweise planparallelen Platte (18) als erstes teilreflektierendes Element und die Rückseite (22) der teildurchlässigen Platte (18) als zweites teilreflektierendes Element eingesetzt werden.

11. Verfahren nach einem der Ansprüche 8 bis 10, bei dem der Zusammenhang zwischen der Fokuslage und dem Interferenzmuster vorab in einer Eichmessung bestimmt wird, wobei insbesondere die aktuelle Fokuslage mit Hilfe des in der Eichmessung bestimmten Zusammenhangs aus dem aktuellen Interferenzmuster bestimmt wird.

12. Verfahren nach einem der Ansprüche 8 bis 11, bei dem der Abstand zweier Interferenzstreifen im Überlappungsbereich (57) des ersten und des zweiten Lichtfeldes (54, 56) zur Bestimmung der Fokuslage verwendet wird.

13. Verfahren nach einem der Ansprüche 8 bis 12, bei dem das Signal eines Sensors (24), der wenigstens einen Teil des Interferenzmusters im Überlappungsbereich (57) des ersten und zweiten reflektierten Lichtfeldes (54, 56) detektiert, direkt oder indirekt als Regelgröße für die Regelung der Fokuslage des dritten Lichtfeldes (58) verwendet wird.

Figur 1

**Europäisches Patentamt**

# EUROPÄISCHER RECHERCHENBERICHT

Nummer der Anmeldung

EP 06 00 3083

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PATENT ABSTRACTS OF JAPAN<br>Bd. 003, Nr. 129 (E-147),<br>26. Oktober 1979 (1979-10-26)<br>-& JP 54 106206 A (MATSUSHITA ELECTRIC IND CO LTD), 21. August 1979 (1979-08-21)<br>* Zusammenfassung; Abbildung 1 *<br>----- | 1-13 | INV.<br>G02B7/28 |
| X | PATENT ABSTRACTS OF JAPAN<br>Bd. 008, Nr. 242 (P-311),<br>7. November 1984 (1984-11-07)<br>-& JP 59 116605 A (RICOH KK),<br>5. Juli 1984 (1984-07-05)<br>* Zusammenfassung; Abbildung 4 *<br>----- | 1-13 | |
| A | US 5 338 924 A (BARRETT ET AL)<br>16. August 1994 (1994-08-16)<br>* Abbildung 1 *<br>----- | 1-13 | |

| | RECHERCHIERTE SACHGEBIETE (IPC) |
|---|---|
| | G06K<br>G02B<br>G01B<br>G01S |

Der vorliegende Recherchenbericht wurde für alle Patentansprüche erstellt

| Recherchenort | Abschlußdatum der Recherche | Prüfer |
|---|---|---|
| Den Haag | 9. Juni 2006 | Quertemont, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                                                  & : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 00 3083

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-2006

| Im Recherchenbericht angeführtes Patentdokument | Datum der Veröffentlichung | Mitglied(er) der Patentfamilie | Datum der Veröffentlichung |
|---|---|---|---|
| JP 54106206 A | 21-08-1979 | KEINE | |
| JP 59116605 A | 05-07-1984 | KEINE | |
| US 5338924 A | 16-08-1994 | KEINE | |

EPO FORM P0461

Für nähere Einzelheiten zu diesem Anhang : siehe Amtsblatt des Europäischen Patentamts, Nr.12/82